# EUROPEAN PATENT SPECIFICATION

(11) **EP 2 724 628 B1**
(45) Date of publication and mention of the grant of the patent: **09.08.2017**
(21) Application number: 12803075.6
(22) Date of filing: 21.06.2012
(51) Int. Cl.: A23L 2/39, A23L 2/08, A23L 3/46, A23L 2/10, A23B 7/026, A23P 10/43, A23L 29/212, A23L 19/00

(54) **ACEROLA CHERRY POWDER AND MANUFACTURING METHOD THEREOF**
ACEROLA-KIRSCHPULVER UND HERSTELLUNGSVERFAHREN DAFÜR
POUDRE DE CERISE ACÉROLA ET SON PROCÉDÉ DE FABRICATION

(30) Priority: 23.06.2011 CN 201110170829
(43) Date of publication of application: 30.04.2014
(73) Proprietor: Natural Medicine Institute of Zhejiang Yangshengtang Co., Ltd., Zhejiang 310007 (CN)
(72) Inventor: CHAI, Yinglei, Hangzhou Zhejiang 310007 (CN); WENG, Huiyan, Hangzhou Zhejiang 310007 (CN); XUE, Lian, Hangzhou Zhejiang 310007 (CN)
(74) Representative: Lavoix
(86) International application number: PCT/CN2012/077357
(87) International publication number: WO 2012/175040

(56) References cited:
- BR-A- 0 103 126
- CN-A- 1 044 495
- CN-A- 101 297 691
- CN-A- 101 766 260
- JP-A- 61 149 067
- US-A- 3 086 915
- ANDRÉA MARA RIGHETTO ET AL: "Vitamin C stability in encapsulated green West Indian cherry juice and in encapsulated synthetic ascorbic acid", JOURNAL OF THE SCIENCE OF FOOD AND AGRICULTURE, vol. 86, no. 8, 1 June 2006 (2006-06-01), pages 1202-1208, XP55092721, ISSN: 0022-5142, DOI: 10.1002/jsfa.2469
- DATABASE WPI Week 200480 Thomson Scientific, London, GB; AN 2004-809135 XP002731949, & JP 2004 329166 A (TAIYO KAGAKU KK) 25 November 2004 (2004-11-25)
- DATABASE WPI Week 200902 Thomson Scientific, London, GB; AN 2009-A36899 XP002731950, & CN 101 297 691 A (CHENGDU CANFO CHEM CO LTD) 5 November 2008 (2008-11-05)
- DATABASE WPI Week 201037 Thomson Scientific, London, GB; AN 2010-G00682 XP002731951, & JP 4 473929 B1 (FANCL CORP) 2 June 2010 (2010-06-02)
- MOREIRA G E G ET AL: "Physical properties of spray dried acerola pomace extract as affected by temperature and drying aids", LWT- FOOD SCIENCE AND TECHNOLOGY, ACADEMIC PRESS, UNITED KINGDOM, vol. 42, no. 2, 1 March 2009 (2009-03-01), pages 641-645, XP025656567, ISSN: 0023-6438, DOI: 10.1016/J.LWT.2008.07.008 [retrieved on 2008-07-24]
- ANDREA, M.R.: 'Vitamin C stability in encapsulated green West Indian cherry juice and in encapsulated synthetic ascorbic acid' J. SCI. FOOD. AGRIC. 2006, pages 1202 - 1208, XP055092721
- LIU, C.H. ET AL.: 'Spray-drying conditions on the flour yield and quality of cherry powder.' FOOD & MACHINERY. vol. 26, no. 6, November 2010, pages 125 - 128, XP008171847
- GERMANO, E.G., M.: 'Physical properties of spray dried acerola pomace extract as affected by temperature and drying aids.' LWT-FOOD SCIENCE AND TECHNOLOGY vol. 42, 2009, pages 641 - 645, XP025656567

## Description

### Technical Field

The invention relates to an acerola cherry powder and a method for producing the same, wherein the powder has a high content of juice solids, a good fluidity, and is easy for processing and preservation.

### Background

Acerola, also called West Indian Cherry or Barbados cherry, is *Malpighia glabra* L., *Malpighia Punicifolia* L. *or Malpighia emarginata* DC., native to tropical America, and is introduced and planted in some areas of China such as Hainan. Acerola cherry is rich in vitamins, minerals and polyphenols, espeically vitamin C. The content of vitamin C in acerola cherry is much higher than the content in common fruits. Green fruits of acerola cherry have a vitamin C content as high as 2-4g per 100g fruits, and thus are a very good source for vitamin C. Some other beneficial ingredients are also discovered therein, such as those dislcosed in Chinese patent application Nos. CN 101115763A (Novel polyphenol glycoside derived from acerola) and CN10117266A (Acerola fruit-derived pectin and use thereof).

Fresh fruits of acerola cherry are processed to get a concentrated juice by conventional processing methods for juice concentration, which means that it does not undergo processes or procedures for the purpose of enhancing the content of a given ingredient in juice, such as extraction by organic solvents and reduction of sugar by fermentation. For example, fruits are directly squeezed to get juice, or are extracted by adding water and crushing, without clarification or with clarification by enzymatic methods or other convnetional methods, and are concentrated under vacuum. The original nutritive substances in acerola cherry are retained as much as possible, without adding regulators such as saccharides and acids.

The juices thus obtained retain most nutritive ingredients and are good for people. However, the easily oxidizable substances rich in them are easily disrupted, and also cause the problems such as precipitation. Therefore, if the juice is provdied in a form of a liquid beverage, it is not easily preserved in shelf life. Drying juice into powder will be good for the preservation of nutritive substances. However, the concentrated juices have a relatively high sugar content, and are not easily dried, and thus adjuvants have to be added as drying aids. Freeze drying has a low efficiency and a high cost, the caking resulted from the freeze drying has to be crushed to get powder, and the fluidity of the powder obtained thereby is poor. Thus, the powder obtained by freeze drying is not suitable for subsequent processing such as tabletting. Spray drying generally uses maltodextrin or dextrin as adjuvant, and spray dried powder may be obtained when a suitable amount of maltodextrin or dextrin is added.

Solids in juice refer to the subtances other than water in the juice, including soluble solids and a few unsoluble solids. Soluble solids may be determined by a refractometer, and the results are generally represented by BRIX, which is a percentage by mass. The amount of juice solids may be determined by calculation: juice solids = the weight of juice × BRIX (percentage by weight), the value is substantially the same as the amount of the substances obtained by directly drying the juice at 105°C in an oven. The powder obtained by drying the concentrated juice after adding adjuvant such as maltodextrin is the total amount of a mixture of solids in the juice and the added adjuvant such as maltodextrin.

In the acerola cherry concentrated juice as describe above, a large amount of maltodextrin has to be added so as to obtain dry juice powder by general spray drying. Generally, no powder is obtained until the ratio of the solids in the concentrated juice/maltodextrin is 1:1 by weight. However, the powder is obtained in a low yield. Moreover, the powder is very moisture-absorptive and not stable for preservation and has a poor fluidity, and thus it cannot be used for subsequent processing. If maltodextrin is added in a larger amount, for example, the ratio of the solids in the concentrated juice/maltodextrin is at least 4:6 or the amount of maltodextrin is even more, most of the powder thus obtained is the adjuvant (i.e. maltodextrin), the content of the juice solids is low, and the flavor is plain. Thus, it is not easy to obtain a juice powder which contains 50% or more juice solids, is stable for preservation, has a good fluidity, and can be used for subsequent processing.

Righetto et al. (Journal of the Science of Food and Agriculture 86(8), 2006, 1202-1208) discloses a stabilised acerola cherry powder made by adding arabic gum and/or maltodextrin to the condensed juice of Acerola. The composition comprises a total soluble solids content of 50% by weight but does not comprise oxidized starch.

JP 2004/329166 discloses a dried fruit powder containing protein excluding fruit origin protein such as wheat, milk or soybean protein and chemically modified starch such as oxidized starch for producing a dried fruit product with a good texture of crispiness.

CN 101 297 691 teaches to add oxidized starch as an assistant shaping agent to a biphasic carotenoid solution comprising a surface active agent and a stabilizing additive so as to obtain a carotenoid powder.

### Contents of Invention

The present invention relates to an acerola cherry powder and a method for producing the same, wherein the powder has a high juice solids content, a good fluidity, and an excellent preservation property, and is suitable for processing, especially tabletting.

The inventors studied the above technical problem to be solved and found out that a fruit powder meeting said requirements could be obtained, by, for example, adding gelatinized oxidized starch to a concentrated juice, mixing them homogeneously, and spray drying them by a general spray drying method; thereby accomplishing the invention.

In the first aspect, the present application describes an acerola cherry powder, comprising at least 51-60% acerola cherry juice solids by mass and 40-49% oxidized starch by mass; preferably 52-58% acerola cherry-juice solids by mass and 42-48% oxidized starch by mass.

The present application also describes the use of oxidized starch in the production of an acerola cherry powder.

The invention relates to a method for producing an acerola cherry powder comprising at least 51-60% acerola cherry juice solids by mass and 40-49% oxidized starch by mass, wherein the method comprises: a step (A) of processing acerola cherry fruits into an acerola cherry concentrated juice, and a step (C) of spray drying the concentrated juice to get a powder; and is characterized by further comprising between the step (A) and the step (C), a step (B) of adding oxidized starch to the acerola cherry concentrated juice. According to an embodiment, in the step (B), the oxidized starch is added in such an amount that the ratio of the solids of the concentrated juice to the oxidized starch is above 1, preferably from 1 to 1.5. In addition, the oxidized starch is added to water and is gelatinized under heating first, and then is added to and is mixed homogeneously with the concentrated juice; or a pre-gelatinized oxidized starch is mixed with the concentrated juice.

### Specific Mode for Carrying out the Invention

The embodiments of the invention are described herein in detail.

### (The steps of obtaining an acerola cherry concentrated juice)

The invention includes the step of processing acerola cherry fruits into an acerola cherry concentrated juice (step A). The acerola cherry concentrated juice is obtained by conventional processing methods for juice concentration. For example, the acerola cherry fruits are squeezed to get juice, and water or pectinase may be added in order to get juice as much as possible. Since the nutritive substances in the acerola cherry juice are easily oxidized, the concentration preferably refers to a concentration under vacuum, such as a thin film concentration under vacuum or a cryoconcentration under vacuum. During concentration, the amount of the juice solids is determined, and the juice is preferably concentrated to contain 20%-55% solids by mass, which is generally determined by measuring the BRIX value. During the procedure, no extraction by organic solvents is employed. A variety of treatments, such as the reduction of sugar content by fermentation, are not carried out, so as to retain the original ingredients and the original ratio in the acerola cherry juice as much as possible.

The step next to the step A of the invention is to add oxidized starch to the concentrated juice.

### (the step of adding oxidized starch)

In the invention, oxidized starch is added to the acerola cherry concentrated juice so that the concentrated juice could be dried easily. Under the circumstance where the adjuvant is added in an amount less than a general one, a fruit powder, which has a high content of juice solids, has a good taste, has a good fluidity, is not easy to get damp, and can be used for tabletting process, is obtained. The oxidized starch is an edible modified starch produced by oxidization of the raw materials such as corn, cassava and other natural starch. The oxidized starch is preferably added in such an amount that the ratio of the solids of the concentrated juice/the oxidized starch is from 1.5 to 1, and preferably from 1.4 to 1.1. If the concentrated juice is present in an excessive amount, the fruit powder would have a dark color and is easy to get damp, and thus is not good for subsequent processing. If the concentrated juice is present in an inadequate amount, the fruit powder would have a plain taste, contain nutritive substances in a relatively small amount, and have a low nutritive value. The oxidized starch is a low-viscosity starch and is not soluble in cold water. The oxidized starch is gelatinized under heating after dispersing it in cold water. Alternatively, a pre-gelatinized oxidized starch is added to the concentrated juice after dissolving it in water, and the mixture is stirred homogeneously. In order to spray dry the mixture successfully to obtain a suitable fruit powder, the percentage of the feedstock by mass may be adjusted, and is generally controlled between 25-40% by mass.

### (The spray drying step)

After the step B, the desired acerola cherry powder is obtained by the spray drying step (step C). General spray drying methods are employed.

The present invention also relates to an acerola cherry powder obtained by the method as described above, wherein the acerola cherry powder comprises at least 51-60% acerola cherry juice solids by mass and 40-49% oxidized starch by mass.

According to an embodiment, the acerola cherry powder comprises 52-58% acerola cherry juice solids by mass and 42-48% oxidized starch by mass.

### [Example]

The examples are illustrated as follows. Unless specified otherwise, "%" used hereafter refers to % by weight.

### Example1

After green fruits of acerola cherry were picked and washed, they were squeezed to get a juice by a screw squeezer. The juice was centrifugated at 2000 rpm for 5 minutes in a centrifuge to get rid of fruit residues. The juice was then concentrated at 25°C under vacuum, until it reached BRIX25° (i.e. the content of solids was 25%). 1 part of cold concentrated juice by weight, 0.22 part of oxidized starch by weight (Lyckeby Culinar AB Co., LYCKEBY 158), and 0.66 part of purified water by weight were used. The oxidized starch was put into the purified water and was stirred homogeneously. After heating to a temperature of at least 80°C, the oxidized starch was gelatinized at the temperature for 10 minutes. Then, the gelatinized oxidized starch was mixed with the concentrated juice homogeneously and the resultant mixture was spray dried at a temperature of 60°C. The powder was collected as the final product after drying. The acerola cherry powder comprised 53 wt% acerola cherry-juice solids. The powder had a good fluidity, and was not agglomerated after being placed in air at a temperature of 30°C under the condition of a relative humidity of 50% for 24 hours. The powder might be preserved for 3 years after being packaged in a HDPE plastic bag.

### Example 2

After green fruits of acerola cherry were picked and washed, they were squeezed to get a juice by a screw squeezer. The juice was centrifugated at 2000 rpm for 5 minutes in a centrifuge to get rid of fruit residues. The juice was then thin film concentrated at 60°C under vacuum, until it reached BRIX50° (i.e. the content of solids was 50%). 1 part of cold concentrated juice by weight, 0.37 part of oxidized starch by weight (Lyckeby Culinar AB Co., LYCKEBY 158), and 1.11 part of purified water by weight were used. The oxidized starch was put into the purified water and was stirred homogeneously. After heating to a temperature of at least 80°C, the oxidized starch was gelatinized at the temperature for 10 minutes. Then, the gelatinized oxidized starch was mixed with the concentrated juice homogeneously and the resultant mixture was spray dried at a temperature of 60°C. The powder was collected as the final product after drying. The acerola cherry powder comprised 57 % acerola cherry-juice solids by mass. The powder had a good fluidity, and was not agglomerated after being placed in air under the condition of a relative humidity of 40% for 24 hours.

### Comparative Example 1

The experiment was carried out according to the method described in Example 1, except that 0.22 part of maltodextrin was used in place of 0.22 part of oxidized starch. The result showed that the spray drying could be carried out only for a short period and could not be continued due to wall-adhering. A small amount of dry powder was collected, and the powder quickly got damp and was agglomerated into granules and masses at 30°C under a relative humidity of 50%.

### Comparative Example 2

The experiment was carried out according to the method described in Example 2, except that 0.37 part of maltodextrin was used in place of 0.37 part of oxidized starch. The result showed serious wall-adhering, and the spray drying could not be carried out. Thus, no powder was obtained.

## Claims

1. A method for producing an acerola cherry powder comprising at least 51-60% acerola cherry juice solids by mass and 40-49% oxidized starch by mass, wherein the method comprises a step (A) of processing acerola cherry fruits into an acerola cherry concentrated juice, and a step (C) of spray drying the concentrated juice to get a powder; and is **characterized by** further comprising between the step (A) and the step (C), a step (B) of adding oxidized starch to the acerola cherry concentrated juice.

2. The method for producing an acerola cherry powder according to claim 1, wherein the oxidized starch in the step (B) is added in such an amount that the ratio of the solids of the concentrated juice to the oxidized starch is from 1.5 to 1.

3. The method for producing an acerola cherry powder according to claim 1, wherein the step (B) comprises adding water to make the final percentage of the mixture of the concentrated juice and the oxidized starch be from 25 to 40%, depending on the amount of the juice solids and the added amount of the oxidized starch.

4. The method for producing an acerola cherry powder according to claim 3, wherein the oxidized starch is homogeneously mixed with the concentrated juice after adding water to and heating the oxidized starch.

5. The method for producing an acerola cherry powder according to claim 3, wherein the oxidized starch is pre-gelatinized and is mixed with the concentrated juice directly and homogeneously.

6. An acerola cherry powder obtained by a method according to any one of claims 1 to 5, wherein the acerola cherry powder comprises at least 51-60% acerola cherry juice solids by mass and 40-49% oxidized starch by mass.

7. The acerola cherry powder according to claim 6, wherein the acerola cherry powder comprises 52-58% acerola cherry juice solids by mass and 42-48% oxidized starch by mass.

## Patentansprüche

1. Verfahren zum Herstellen eines Acerola-Kirschpulvers, das zumindest 51 bis 60 Masseprozent Acerola-Kirschsaftfeststoffe und 40 bis 49 Masseprozent oxidierte Stärke umfasst, wobei das Verfahren einen Schritt (A) des Verarbeitens von Acerola-Kirschfrüchten in einen konzentrierten Acerola-Kirschsaft und einen Schritt (C) des Sprühtrocknens des konzentrierten Safts zum Erhalt eines Pulvers umfasst; und das **dadurch gekennzeichnet ist, dass** es ferner zwischen Schritt (A) und Schritt (C) einen Schritt (B) des Hinzufügens von oxidierter Stärke zu einem konzentrierten Acerola-Kirschsaft umfasst.

2. Verfahren zum Herstellen eines Acerola-Kirschpulvers nach Anspruch 1, wobei die oxidierte Stärke in Schritt (B) in einer solchen Menge hinzugefügt wird, dass das Verhältnis der Feststoffe des konzentrierten Safts zur oxidierten Stärke 1,5 bis 1 beträgt.

3. Verfahren zum Herstellen eines Acerola-Kirschpulvers nach Anspruch 1, wobei Schritt (B) das Hinzufügen von Wasser umfasst, um den Endprozentsatz der Mischung des konzentrierten Safts und der oxidierten Stärke auf 25 bis 40 % zu bringen, je nach Menge der Saftfeststoffe und der hinzugefügten Menge der oxidierten Stärke.

4. Verfahren zum Herstellen eines Acerola-Kirschpulvers nach Anspruch 3, wobei die oxidierte Stärke mit dem konzentrierten Saft homogen vermischt wird, nachdem Wasser zur oxidierten Stärke hinzugefügt und diese erhitzt wurde.

5. Verfahren zum Herstellen eines Acerola-Kirschpulvers nach Anspruch 3, wobei die oxidierte Stärke vorgelatiniert wird und mit dem konzentrierten Saft direkt und homogen vermischt wird.

6. Acerola-Kirschpulver, das mit einem Verfahren nach einem der Ansprüche 1 bis 5 erhalten wird, wobei das Acerola-Kirschpulver zumindest 51 bis 60 Masseprozent Acerola-Kirschsaftfeststoffe und 40 bis 49 Masseprozent oxidierte Stärke umfasst.

7. Acerola-Kirschpulver nach Anspruch 6, wobei das Acerola-Kirschpulver 52 bis 58 Masseprozent Acerola-Kirschsaftfeststoffe und 42 bis 48 Masseprozent oxidierte Stärke umfasst.

## Revendications

1. Procédé de production d'une poudre de cerise acérola comprenant au moins 51-60 % de solides de jus de cerise acérola en masse et 40-49 % d'amidon oxydé en masse, où le procédé comprend une étape (A) de traitement de fruits de cerise acérola en un jus concentré de cerise acérola, et une étape (C) de lyophilisation du jus concentré pour obtenir une poudre ; et est **caractérisé en ce qu'**il comprend en outre, entre l'étape (A) et l'étape (C), une étape (B) d'ajout d'amidon oxydé au jus concentré de cerise acérola.

2. Procédé de production d'une poudre de cerise acérola selon la revendication 1, dans lequel l'amidon oxydé à l'étape (B) est ajouté en une telle quantité que le rapport des solides du jus concentré sur l'amidon oxydé est compris entre 1,5 et 1.

3. Procédé de production d'une poudre de cerise acérola selon la revendication 1, dans lequel l'étape (B) comprend l'ajout d'eau afin que le pourcentage final du mélange de jus concentré et de l'amidon oxydé soit compris entre 25 et 40 %, en fonction de la quantité de solides du jus et de la quantité d'amidon oxydé ajoutée.

4. Procédé de production d'une poudre de cerise acérola selon la revendication 3, dans lequel l'amidon oxydé est mélangé de manière homogène avec le jus concentré après l'ajout d'eau et le chauffage de l'amidon oxydé.

5. Procédé de production d'une poudre de cerise acérola selon la revendication 3, dans lequel l'amidon oxydé est prégélatinisé puis est mélangé avec le jus concentré directement et de manière homogène.

6. Poudre de cerise acérola obtenue par un procédé selon l'une quelconque des revendications 1 à 5, où la poudre de cerise acérola comprend au moins 51-60 % de solides de jus de cerise acérola en masse et 40-49 % d'amidon oxydé en masse.

7. Poudre de cerise acérola selon la revendication 6, dans lequel la poudre de cerise acérola comprend 52-58 % de solides de jus de cerise acérola en masse et 42-48 % d'amidon oxydé en masse.
